# EUROPÄISCHE PATENTSCHRIFT

(11) **EP 1 729 016 B1**
(45) Veröffentlichungstag und Bekanntmachung des Hinweises auf die Patenterteilung: **27.05.2009**
(21) Anmeldenummer: 05011993.2
(22) Anmeldetag: 03.06.2005
(51) Int. Cl.: F16B 2/16, F16B 21/00, B62D 1/187

(54) **Vorrichtung zum relativen Verstellen zweier Teile**
Device for adjusting two members relative to each other
Dispositif de réglage de deux éléments l'un par rapport à l'autre

(43) Veröffentlichungstag der Anmeldung: 06.12.2006
(73) Patentinhaber: ThyssenKrupp Presta AG, 9492 Eschen (LI)
(72) Erfinder: Battlogg, Stefan, 6771 Anton/Montafon (AT)
(74) Vertreter: Hofinger, Stephan

(56) Entgegenhaltungen:
- DE-B- 1 117 946
- GB-A- 191 517 310
- US-A- 3 991 964

## Beschreibung

Die Erfindung betrifft eine Vorrichtung zum relativen Verstellen zweier Teile.

Zum Fixieren zweier zueinander beweglicher Teile werden üblicherweise Befestigungselemente in korrespondierende Bohrungen eingesetzt und dort gesichert. Wenn die Verbindungen wieder lösbar sein sollen, so werden geeignete Befestigungselemente gewählt, beispielsweise Schrauben, die aus einer Gewindebohrung wieder herausgedreht werden können, bzw. von denen eine Schraubenmutter wieder abnehmbar ist. Komplizierter wird die Befestigung, wenn die beiden Teile in unterschiedlichen Positionen zueinander fixiert werden sollen, und insbesondere dann, wenn zumindest eine quasi-stufenlose Auswahl von Befestigungspositionen möglich werden soll. Für die Befestigung in unterschiedlichen Positionen ist zumindest eine weitere Bohrung od, dgl. erforderlich, und das Befestigungselement kann dann wahlweise in eine der Bohrungen eingesetzt werden. Liegen die gewünschten Positionen zueinander zu knapp aneinander, sind unter Umständen eine größere Anzahl von Bohrungen erforderlich, die unterschiedliche Abstände aufweisen und beispielsweise in Reihen nebeneinander vorgesehen sind.

Eine Möglichkeit für eine Festlegung zweier Teile in beliebigen Positionen zeigt die DE 850103. Hier weist der eine Teil zwei oder drei Schrauben mit einem spitzen Ende auf, und der andere Teil ist sägeblattähnlich mit Zähnen versehen, deren Flanken dieselbe Neigung wie die Spitzen der Schrauben aufweisen. Der Abstand zwischen den Schrauben entspricht nicht dem der Zähne, sodass immer die Schrauben so gesetzt werden können, dass sie an einer linken und einer rechten Zahnflanke anliegen. Dabei dringen sie meist unterschiedlich tief zwischen die Zähne ein.

Aus der GB 17,31011915 ist eine Drehkupplung bekannt, wobei die beiden Teile je eine Nut aufweisen, und ein Kranz von Kugeln vorgesehen ist, die in beide Nuten eingreifen und durch eine Stellschraube verspannt werden. Beim Lösen der Schraube lockern sich die Kugeln und der zweite Teil kann um die gemeinsame Achse verdreht werden, worauf die Kugeln wieder verklemmt werden.

Die Verwendung von Kugeln zum zeitweise Verspannen zweier Teile, beispielsweise eines in einer Werkstückaufnahme längsverschiebbaren Werkstückes ist aus der DE 11 17 946 bekannt. Das Werkstück ist teilweise oder ganz von Kugeln (oder Rollen) umgeben, die in gelockertem Zustand zick-zack-förmig angeordnet sind. Mittels eines Hebels wird zum Fixieren in der gewünschten Position eine der hochstehenden Kugeln nieder gedrückt, sodass alle Kugeln im Raum zwischen den beiden Teilen verkeilt werden.

Die DE 236 134 zeigt eine Vorrichtung zum Zentrieren einer Scheibe od. dgl. auf einer Welle, wobei die Bohrung der Scheibe größer als der Wellendurchmesser ist. Die Welle weist radiale Bohrungen auf, in denen mittels eines axialen Kegelbolzens nach außen verdrängbare Kugeln vorgesehen sind. Wenn die Scheibe durch die Kugeln zentriert ist, wird sie zwischen zwei verstellbaren Flanschen verspannt.

Die Erfindung schlägt nun eine Vorrichtung vor, bei der der erste Teil eine mit Kugeln gefüllte Kammer begrenzt, zwischen die der zweite Teil eingreift und von denen er am ersten Teil gegen seitliches Verschieben fest gehaftet ist, wobei zum Verschieben der beiden Teile das Kammervolumen so vergrößerbar ist, dass der zweite Teil unter Umlagerung der Kugeln bewegt werden kann.

Auf diese Weise kann der zweite Teil nahezu in jeder beliebigen Position innerhalb des Verstellbereiches fixiert werden, indem das Volumen der Kammer wieder so weit verkleinert wird, dass keine Bewegung des zweiten Teiles bzw. der Kugeln mehr möglich ist. Die Kugeln arrangieren sich dabei rund um den zwischen ihnen angeordneten zweiten Teil solange, bis die für die jeweilige Position dichteste Packung erreicht ist. Der zweite Teil wird daher gegen seitliches Verschieben formschlüssig gehalten,

In einer bevorzugten Ausführung ist vorgesehen, dass die Kugeln in einer einzigen Schicht vorgesehen sind. Damit entspricht die Höhe der Kammer dem Durchmesser der Kugeln. Da für die Vergrößerung des Kammervolumens vorzugsweise eine Begrenzungswand der Kammer verstellt wird (alternativ ist auch eine Verkleinerung des Querschnitts des zweiten Teiles möglich), erstreckt sich vor allem bei nur einer einzigen Kugelschicht die verstellbare Begrenzungswand vorzugsweise parallel zur Kugelschicht und bildet somit einen Deckel der Kammer. Es hat sich gezeigt, dass bereits eine Anhebung der Begrenzungswand um etwa ein Viertel des Kugeldurchmessers genügt, um beim Verschieben des zweiten Teiles in der Ebene der Kugelschicht einer ausreichenden Anzahl von Kugeln das Ausweichen aus der Kugelschicht zu ermöglichen.

Bevorzugt ist die verstellbare Begrenzungswand am zweiten Teil senkrecht zur Kugelschicht verschiebbar angeordnet. Da sich die Begrenzungswand in dieser Ausführung beim Verstellen des zweiten Teiles nach dem Vergrößern des Kammervolumens mit dem zweiten Teil mitbewegt, überragt sie die Kammer nach allen Seiten, da sie auch in einer maximalen Verstellposition die Kugelschicht am gegenüberliegenden Rand abdecken muss.

In vielen Anwendungsfällen, beispielsweise bei einer verstellbaren Lenksäule eines Kraftfahrzeuges, durchsetzt der zweite Teil, der in diesem Beispiel die Lenksäule lagert, den (karossierie-)festen ersten Teil, und es ist in einer weiteren Ausführung vorzugsweise vorgesehen, dass die zur verstellbaren Begrenzungswand parallele Begrenzungswand, also der Boden der Kammer, mit dem zweiten Teil verbunden ist. In dieser Ausführung stellen die dem ersten Teil angehörenden Begrenzungswände der Kammer einen Rahmen der Kugelschicht dar, der sich innerhalb des Bodens und des öffenbaren Deckels verschiebt.

Prinzipiell ist es auch möglich, zumindest eine der seitlichen Begrenzungswände der Kammer zu verstellen, was ebenso einen Freiraum für die Bewegung des zweiten Teiles und die Verschiebung der Kugeln schafft.

Wenn der zweite Teil stab- oder rohrförmig ist, kann der verstellbaren Begrenzungswand eine Führungshülse zugeordnet sein, die auf dem zweiten Teil axial verstellbar ist. Wenn die Führungshülse und der zweite Teil mit Innen- und Außengewinde versehen sind oder einen Bajonettverschluss od. dgl. bilden, so kann die Führungshülse mit einem Griff versehen sein, der beispielsweise zwischen zwei Anschlägen verschwenkbar ist.

Der zweite Teil kann nicht nur parallel zur Kugelschicht in zwei Richtungen, sondern auch senkrecht dazu verstellt und formschlüssig gehalten werden, wenn der zweite Teil am Umfang Rillen aufweist und in einem Rohrstück axial verschiebbar ist, das im Bereich der Kugelschicht Durchbrechungen für den Durchtritt von Kugeln in die Rillen aufweist. Die nicht verstellbare Begrenzungswand der Kammer ist am Rohrstück angeordnet und die Führungshülse der verstellbaren Begrenzungswand ist auf dem Rohrstück längsverstellbar gelagert. Wird das Kammervolumen vergrößert, so können in dieser Ausführung die durch die Durchbrechungen in die Rillen des zweiten Teiles eingreifenden Kugeln aus den Rillen austreten, sodass der zweite Teil in die gewünschte Position axial im Rohrstück verschoben werden kann. Wird das Kammervolumen wieder verkleinert, so treten die Kugeln wieder durch die Durchbrechungen in die Umfangsrillen des zweiten Teiles ein und halten ihn fest. Auch in dieser Ausführung ist vorteilhaft die Führungshülse oder ein auf die Führungshülse wirkender Stellring mit einem Griff versehen.

Die erfindungsgemäße Vorrichtung ist für eine Vielzahl von Versteifeinrichtungen einsetzbar. Die Anwendung zur dreidimensionalen Verstellung einer Kraftfahrzeuglenksäule ist oben bereits erwähnt, und die Erfindung wird nachstehend auch für eine Vorrichtung beschrieben, die für eine in der Länge, in der Neigung und in der seitlichen Ausrichtung verstellbare Lenksäule eines Kraftfahrzeuges geeignet ist, ohne darauf beschränkt zu sein.

Die erfindungsgemäße Vorrichtung lässt sich zur zweidimensionalen Festlegung beliebiger Bauteile anwenden, die nicht alle aufgezählt werden können. Insbesondere stellt sie überall dort eine einfache Konstruktion dar, wo zwischen mehreren Grundpositionen gewählt werden soll, zwischen denen insbesondere nur gelegentlich verstellt werden soll bzw. eine Feinjustierung ermöglicht werden soll. Sie ist ebenso für die Sitzverstellung von Kraftfahrzeugsitzen, für eine Höhenverstellung von Möbeifoßen, für eine allseitige Verschwenkung eines Beleuchtungskörpers, usw. einsetzbar.

Es zeigen:
- Fig. 1: eine Schrägansicht einer Lenksäule mit einer erfindungsgemäßen Vorrichtung,
- Fig. 2: eine Vorderansicht ohne verstellbare Begrenzungswand,
- Fig. 3: einen vergrößerten Längsschnitt in Festhaltestellung, und
- Fig. 4: einen vergrößerten Längsschnitt in Verstellstellung.

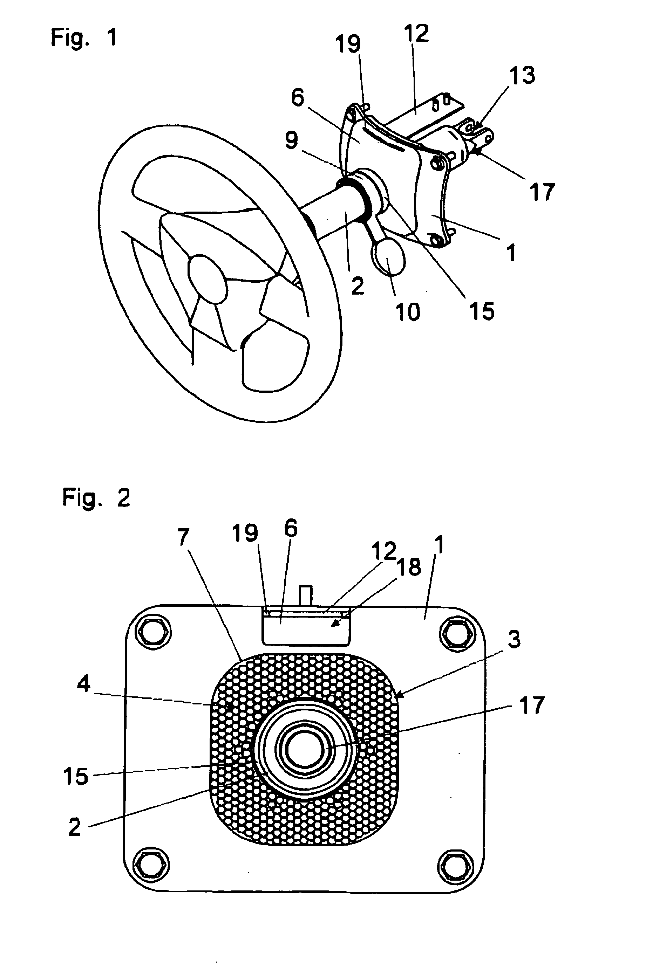

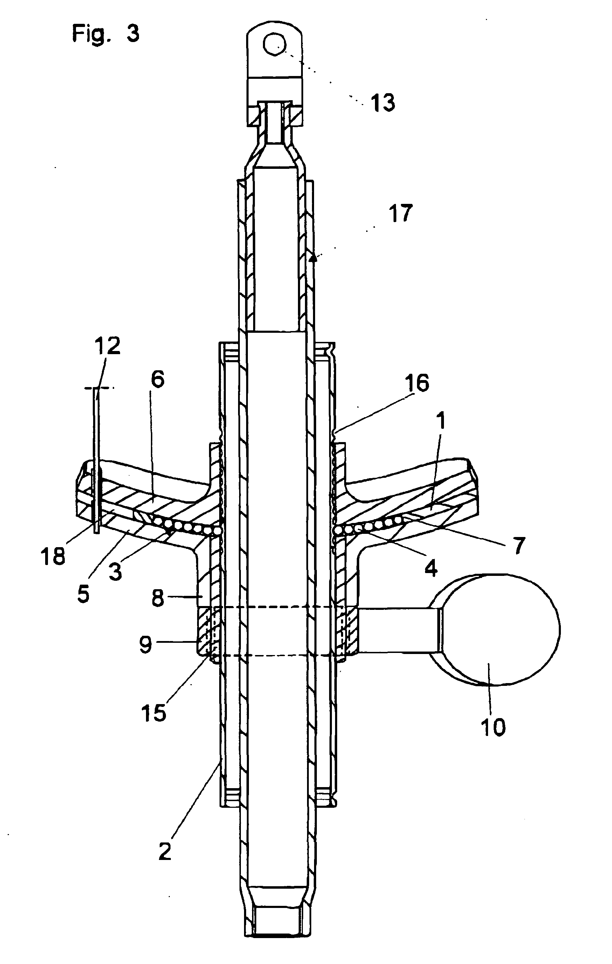

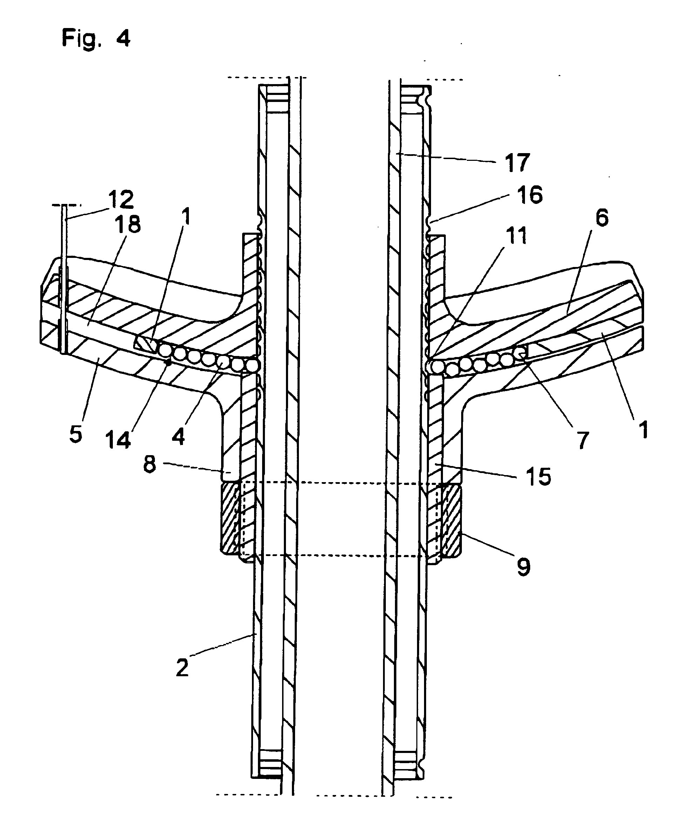

Eine Lenksäule 17 eines Kraftfahrzeuges weist zwei teleskopisch ineinander schiebbare Rohrstücke auf, und ist nur ein Kardangelenk 13 sowohl in der Neigung als auch seitlich einstellbar. An der Karosserie ist ein erster Teil 1 der erfindungsgemäßen Verstellvorrichtung in Form einer gekrümmten Platte fixiert, die eine Öffnung aufweist. In Fig. 2 sind die die Öffnung begrenzenden Ränder 7 ersichtlich. Die Ränder 7 und die beiden zueinander parallelen Wände 5, 6 begrenzen eine Kammer 3 (Fig. 3, 4), die vom zweiten Teil 2 der Verstellvorrichtung durchsetzt wird, in dem die Lenksäule 17 drehbar gelagert ist. Der zweite Teil 2 ist in einem Durchbrechungen 11 aufweisenden Rohrstück 15 axial verschiebbar angeordnet und weist am Umfang durchgehende oder versetzte Rillen 16 auf. Die Kammer 3 ist, wie Fig. 2 zeigt, mit einer Schicht 4 von Kugeln gefüllt, wobei einige der Kugeln, wie Fig. 3 zeigt, durch die Durchbrechungen 11 in die Rillen 16 des zweiten Teiles 2 eingreifen. Die dicht gepackte Kugelschicht 4 verhindert die Verlagerung des zweiten Teiles 2 in alle drei Richtungen, solange die Kammer 3 allseitig geschlossen ist und ihr kleinstes Volumen aufweist (Fig. 3).

Für die Verstellung des zweiten Teiles 2 wird das Volumen der Kammer 3 vergrößert, sodass sich eine ausreichende Anzahl von Kugeln in der Schicht 4 umlagern kann und ein Bewegungsfreiraum 14 für den zweiten Teil zwischen den Kugeln geschaffen wird.

Für die Volumensvergrößerung wird insbesondere die einen Deckel bildende Begrenzungswand 5 angehoben. Fig. 4 zeigt an der linken Seite die Kugeln der Schicht 4 in der Festhaltelage, in der die innerste Kugel in einer Rille 16 des zweiten Teiles liegt. An der rechten Seite der Fig. 4 haben sich die Kugeln verlagert und die innerste Kugel ist aus der Rille 16 ausgetreten. Die Lenksäule 17 kann nun axial über den mit Rillen 16 versehenen Bereich des Teiles 2 verschoben werden und um das Gelenk 13 geschwenkt werden, wobei beispielsweise die Neigungsverstellung in Fig. 3 und 4 durch Verschwenkung in der Zeichnungsebene erfolgt.

Wenn die gewünschte Position erreicht ist, wird die Kammer 3 wieder verkleinert, sodass die Kugeln wieder in die dichteste Packung überführt werden und jegliche Verschiebung des zweiten Teiles 2 sperren.

Für das Anheben und Absenken der verstellbaren Begrenzungswand 5 ist diese an einer Führungshülse 8 angeordnet, die auf dem Rohrstück 15 axial verstellbar ist. Das Rohrstück 15 trägt die den Boden der Kammer 3 bildende Begrenzungswand 6. Das Rohrstück 15 kann beispielsweise ein Gewinde oder eine ansteigende Kulissenbahn aufweisen, auf dem die Führungshülse 8 oder ein ihr zugeordneter Stellring 9 verdrehbar ist. Zur leichteren Handhabung kann ein Griff 10 vorgesehen sein. In der geschlossenen Stellung der Kammer 3 (Fig. 3) liegt die am Rohrstück 15 fixierte Begrenzungswand 6 an der Innenseite und die auf dem Rohrstück 15 verstellbare Begrenzungswand 5 an der Außenseite des plattenförmigen ersten Teiles 1 an. Die Dicke des ersten Teiles 1 und damit die Höhe der Kammer 3 entspricht dem Durchmesser der Kugeln. Bei der Verstellung des zweiten Teiles 2 parallel zur Kugelschicht 4 bewegen sich die beiden Begrenzungswände 5, 6 mit dem zweiten Teil 2 mit und überragen daher jeweils die Ränder 7 des ersten Teiles 1 zumindest um den Verstellweg des zweiten Teiles 2, da die Kugelschicht 4 immer abgedeckt sein muss. Aufgrund der Verschwenkung im Kardangelenk 13 sind der erste Teil 1 und die beiden Begrenzungswände 5 und 6 entsprechende Kugelflächen.

Um bei der Verdrehung der Lenksäule 17 den zweiten Teil 2 gegen Verdrehen zu sichern, kann eine Verdrehsicherung in Form eines karosseriefesten Ferderelementes 12 vorgesehen sein, das Schlitze 19 in den Begrenzungswänden 5 und 6 und eine Ausnehmung18 durchsetzt, wie in Fig. 1 und 2 schematisch dargestellt ist.

Die Kugeln sind insbesondere Stahlkugeln, wie sie für Kugellager verwendet werden, gegebenenfalls sind auch Kunststoffkugeln verwendbar. Die verstellbare Begrenzungswand 5 könnte an der zur Kugelschicht 4 weisenden Seite eine geräuschdämmende Auflage aus Gummi od. dgl. aufweisen, um Erschütterungsgeräusche zu vermeiden. Die Schließstellung der verstellbaren Begrenzungswand 5 kann gegebenenfalls auch federbeaufschlagt sein, beispielsweise durch eine zwischen der Führungshülse 8 und dem Stellring 9 eingesetzte Tellerfeder od. dgl.

## Patentansprüche

1. Vorrichtung zum relativen Verstellen zweier Teile (1, 2), **dadurch gekennzeichnet, dass** der erste Teil (1) eine mit Kugeln gefüllte Kammer (3) begrenzt, zwischen die der zweite Teil (2) eingreift und von denen er am ersten Teil (1) gegen seitliches Verschieben fest gehalten ist, und dass zum Verschieben der beiden Teile (1, 2) das Kammervolumen so vergrößerbar ist, dass der zweite Teil (2) unter Umlagerung der Kugeln bewegt werden kann.

2. Vorrichtung nach Anspruch 1, **dadurch gekennzeichnet, dass** die Kugeln in einer einzigen Schicht (4) vorgesehen sind.

3. Vorrichtung nach Anspruch 1, **dadurch gekennzeichnet, dass** für die Vergrößerung des Kammervolumens zumindest eine Begrenzungswand (5) der Kammer (3) verstellbar ist.

4. Vorrichtung nach Anspruch 2 und 3, **dadurch gekennzeichnet, dass** sich die verstellbare Begrenzungswand (5) parallel zur Kugelschicht (4) erstreckt.

5. Vorrichtung nach Anspruch 3 oder 4, **dadurch gekennzeichnet, dass** die verstellbare Begrenzungswand (5) am zweiten Teil (2) senkrecht zur Kugelschicht (4) verschiebbar angeordnet ist.

6. Vorrichtung nach einem der Ansprüche 1 bis 5, **dadurch gekennzeichnet, dass** der zweite Teil (2) den ersten Teil (1) durchsetzt und die zur verstellbaren Begrenzungswand (5) parallele Begrenzungswand (6) der Kammer (3) dem zweiten Teil (1) zugeordnet ist.

7. Vorrichtung nach Anspruch 5 oder 6, **dadurch gekennzeichnet, dass** der zweite Teil (2) stab- oder rohrförmig ausgebildet ist und die verstellbare Begrenzungswand (5) an einer Führungshülse (8) vorgesehen ist, die auf dem zweiten Teil (2) axial verstellbar ist.

8. Vorrichtung nach einem der Ansprüche 1 bis 7, **dadurch gekennzeichnet, dass** der zweite Teil (2) am Umfang Rillen (16) aufweist und .in einem Rohrstück (15) axial verschiebbar ist, das im Bereich der Kugelschicht (4) Durchbrechungen (11) für den Durchtritt von Kugeln in die Rillen (16) aufweist, wobei die nicht verstellbare Begrenzungswand (6) mit dem Rohrstück (15) verbunden und die Führungshülse (8) der verstellbaren Begrenzungswand (5) auf dem Rohrstück (15) längsverstellbar angeordnet ist.

9. Vorrichtung nach Anspruch 7 oder 8, **dadurch gekennzeichnet, dass** der zweite Teil (2) bzw. das Rohrstück (15) ein Außengewinde und ein an die Führungshülse (8) anschließender Stellring (9) ein Innengewinde aufweist.

10. Vorrichtung nach Anspruch 9, **dadurch gekennzeichnet, dass** der Stellring (9) mit einem Griff (10) versehen ist.

11. Vorrichtung nach einem der Ansprüche 8 bis 10, **dadurch gekennzeichnet, dass** zur dreidimensionalen Verstellung einer teleskopischen, in einem Kardangelenk verschwenkbaren Kraftfahrzeuglenksäule (17) der erste Teil (1) der Vorrichtung durch eine an der Karosserie des Kraftfahrzeuges fixierbare, gekrümmte Platte gebildet ist, die eine Öffnung aufweist, und in dem im Rohrstück (15) verschiebbaren zweiten Teil (2) die Lenksäule (17) drehbar lagerbar ist, wobei das Rohrstück (15) die Öffnung in der gekrümmten Platte durchsetzt, und die beiden mit dem Rohrstück (15) seitlich verschiebbaren Begrenzungswände (5, 6), die die Öffnung in der Platte abdecken, der Platte entsprechend gekrümmt sind.

## Claims

1. Apparatus for the relative adjustment of two parts (1, 2) **characterised in that** the first part (1) defines a chamber (3) filled with balls, between which the second part (2) engages and by which it is held fast to the first part (1) against lateral motions, and that for lateral motion adjustment of the two parts (1, 2) the chamber volume can be increased in such a way that the second part (2) can be moved with rearrangement of the balls.

2. Apparatus according to claim 1 **characterised in that** the balls are provided in a single layer (4).

3. Apparatus according to claim 1 **characterised in that** at least one boundary wall (5) of the chamber (3) is adjustable for increasing the chamber volume.

4. Apparatus according to claim 2 and claim 3 **characterised in that** the adjustable boundary wall (5) extends parallel to the layer of balls (4).

5. Apparatus according to claim 3 or claim 4 **characterised in that** the adjustable boundary wall (5) is arranged on the second part (2) displaceably in perpendicular relationship to the layer of balls (4).

6. Apparatus according to one of claims 1 to 5 **characterised in that** the second part (2) passes through the first part (1), and a boundary wall (6) of the chamber (3), which is parallel to the adjustable boundary wall (5), is associated with the second part (2).

7. Apparatus according to claim 5 or claim 6 **characterised in that** the second part (2) is of a rod-shaped or tubular configuration and the adjustable boundary wall (5) is provided on a guide sleeve (8) which is axially adjustable on the second part (2).

8. Apparatus according to one of claims 1 to 7 **characterised in that** the second part (2) has grooves (16) at the periphery and is axially displaceable in a tubular part (15) which in the region of the layer of balls (4) has openings (11) for balls to pass therethrough into the grooves (16), wherein the non-adjustable boundary wall (6) is connected to the tubular part (15) and the guide sleeve (8) of the adjustable boundary wall (5) is arranged longitudinally adjustably on the tubular part (15).

9. Apparatus according to claim 7 or claim 8 **characterised in that** the second part (2) or the tubular part (15) has a male screwthread and an adjusting ring (9) adjoining the guide sleeve (8) has a female screwthread.

10. Apparatus according to claim 9 **characterised in that** the adjusting ring (9) is provided with a handle (10).

11. Apparatus according to claims 8 to 10, **characterised in that** for the three dimensional adjustment of a telescopic in a cardan joint pivotable steering column (17), the first part (1) of the apparatus is formed by a curved plate fixed to the chassis of the automobile, which has an opening and **in that** the steering column (17) is rotatable mountable in the second part (2) slideable in the tubular part (15), wherein the tubular part (15) passes through the opening in the curved plate, and wherein both laterally adjustable boundry walls (5, 6), which cover the opening in the plate, are curved according to the plate.

## Revendications

1. Dispositif de réglage relatif de deux éléments (1, 2), **caractérisé en ce que** le premier élément(1) délimite une chambre (3) remplie de sphères, entre lesquelles le second élément (2) s'engage et parmi lesquelles il est maintenu bloqué sur le premier élément (1) contre tout déplacement latéral, et **en ce que** pour le déplacement des deux éléments (1, 2), le volume de la chambre peut être agrandi de sorte que le second élément (2) puisse être déplacé en réarrangeant les sphères.

2. Dispositif selon la revendication 1, **caractérisé en ce que** les sphères sont prévues en une seule couche (4).

3. Dispositif selon la revendication 1, **caractérisé en ce qu'**au moins une paroi de délimitation (5) de la chambre (3) peut être réglée pour l'agrandissement du volume de la chambre.

4. Dispositif selon la revendication 2 ou 3, **caractérisé en ce que** la paroi de délimitation (5) réglable s'étend parallèlement à la couche de sphères (4).

5. Dispositif selon la revendication 3 ou 4, **caractérisé en ce que** la paroi de délimitation (5) réglable sur le second élément (2) est disposée à coulissement perpendiculairement à la couche de sphères (4).

6. Dispositif selon l'une quelconque des revendications 1 à 5, **caractérisé en ce que** le second élément (2) traverse le premier élément (1) et la paroi de délimitation (6) de la chambre (3) parallèle à la paroi de délimitation (5) réglable est associée au second élément (1).

7. Dispositif selon la revendication 5 ou 6, **caractérisé en ce que** le second élément (2) est réalisé en forme de barre ou de tube et la paroi de délimitation (5) réglable est prévue sur une douille de guidage (8) qui est réglable axialement sur le second élément (2).

8. Dispositif selon l'une quelconque des revendications 1 à 7, **caractérisé en ce que** le second élément (2) présente sur la périphérie des rainures (16) et est mobile axialement dans un élément tubulaire (15) qui présente dans la zone de la couche de sphères (4) des percements (11) pour le passage des sphères dans les rainures (16), la paroi de délimitation (6) non réglable étant reliée à l'élément tubulaire (15) et la douille de guidage (8) de la paroi de délimitation (5) réglable étant disposée de manière réglable en longueur sur l'élément tubulaire (15).

9. Dispositif selon la revendication 7 ou 8, **caractérisé en ce que** le second élément (2) ou l'élément tubulaire (15) présente un filetage extérieur et une bague de butée (9) contigüe à la douille de guidage (8) présente un filetage intérieur.

10. Dispositif selon la revendication 9, **caractérisé en ce que** la bague de butée (9) est pourvue d'une poignée (10).

11. Dispositif selon l'une quelconque des revendications 8 à 10, **caractérisé en ce que** pour le réglage en trois dimensions d'une colonne de direction de véhicule automobile (17) télescopique, pivotant dans un joint de Cardan, le premier élément (1) du dispositif est formé par une plaque courbée, pouvant être fixée sur la carrosserie du véhicule automobile, qui présente une ouverture, et **en ce que** dans le second élément (2) mobile dans l'élément tubulaire (15), la colonne de direction (17) est montée à rotation, l'élément tubulaire (15) traversant l'ouverture dans la plaque courbée, et les deux parois de délimitation (5, 6) mobiles latéralement avec l'élément tubulaire (15) qui recouvrent l'ouverture dans la plaque, étant courbées selon la plaque.
